# EUROPEAN PATENT SPECIFICATION

(11) **EP 4 177 078 B1**
(45) Date of publication and mention of the grant of the patent: **07.05.2025**
(21) Application number: 22205716.8
(22) Date of filing: 07.11.2022
(51) Int. Cl.: B60C 7/14, B60B 9/26, B33Y 80/00

(54) **NON-PNEUMATIC TIRE AND WHEEL ASSEMBLY AND METHOD OF MANUFACTURING**
LUFTLOSER REIFEN UND RADANORDNUNG SOWIE VERFAHREN ZUR HERSTELLUNG
PNEU NON PNEUMATIQUE ET ENSEMBLE ROUE ET PROCÉDÉ DE FABRICATION

(30) Priority: 08.11.2021 US 202163263713 P; 20.10.2022 US 202218048194
(43) Date of publication of application: 10.05.2023
(73) Proprietor: The Goodyear Tire & Rubber Company, Akron, OH 44316 (US)
(72) Inventor: SIGLER, Wesley Glen, Baberton, 44203 (US); YENSHO, Nate Edward, Akron, 44321 (US); MYERS, Ann Elizabeth, Cuyahoga Falls, 44221 (US); MILLER, Andrew James, Akron, 44305 (US); FENSTERMAKER, Christopher Dean, Canfield, 44406 (US); GOPALA, Arun Kumar Byatarayanapura, Copley, 44321 (US); BHUIYAN, Md Atiqur Rahman, Copley, 44321 (US)
(74) Representative: Kutsch, Bernd

(56) References cited:
- EP-A1- 3 838 618
- EP-A1- 4 023 461
- EP-A1- 4 094 956
- WO-A1-03/018332
- CN-B- 109 591 518
- JP-A- 2017 165 119
- US-A1- 2013 240 272
- US-S- D 909 286

## Description

### Field of the Invention

The invention relates in general to a vehicle wheel, and more particularly to a non-pneumatic tire and wheel assembly and its manufacturing.

### Background of the Invention

The pneumatic tire has been the solution of choice for vehicular mobility for over a century. The pneumatic tire is a tensile structure. The pneumatic tire has at least four characteristics that make the pneumatic tire so dominate today. Pneumatic tires are efficient at carrying loads because all of the tire structure is involved in carrying the load. Pneumatic tires are also desirable because they have low contact pressure, resulting in lower wear on roads due to the distribution of the load of the vehicle. Pneumatic tires also have low stiffness, which ensures a comfortable ride in a vehicle. The primary drawback to a pneumatic tire is that it requires compressed fluid. A conventional pneumatic tire is rendered useless after a complete loss of inflation pressure.

A tire designed to operate without inflation pressure may eliminate many of the problems and compromises associated with a pneumatic tire. Neither pressure maintenance nor pressure monitoring is required. Structurally supported tires such as solid tires or other elastomeric structures to date have not provided the levels of performance required from a conventional pneumatic tire. A structurally supported tire solution that delivers pneumatic tire-like performance would be a desirous improvement.

Non-pneumatic tires are typically defined by their load carrying efficiency. "Bottom loaders" are essentially rigid structures that carry a majority of the load in the portion of the structure below the hub. "Top loaders" are designed so that all of the structure is involved in carrying the load. Top loaders thus have a higher load carrying efficiency than bottom loaders, allowing a design that has less mass.

Thus, an improved non-pneumatic tire is desired that has all the features of the pneumatic tires without the drawback of the need for air inflation is desired. It is also desired to have an improved non-pneumatic tire that has longer tread life as compared to a pneumatic tire of the same size.

Non-pneumatic tire and wheel assemblies comprising a radially inner wheel structure and a spoke ring structure having an inner ring that is mounted on a radially outer wheel structure mounting surface of the wheel structure, wherein the spoke ring structure has a plurality of spoke members and wherein a radially outer tread ring is mounted on the outer circumference of the spoke ring structure are known from US 2013/240272 A1, WO 03/018332 A1, US D909 286 S, CN 109 591 518 B, EP 3 838 618 A1 and JP 2017 165 119 A. Such assemblies are also described in EP 4 023 461 A1 and EP 4 094 956 A1, which are published only after the priority date of this application.

### Summary of the Invention

The invention relates to a non-pneumatic tire and wheel assembly in accordance with claim 1 and to a method in accordance with claim 8.

Dependent claims refer to preferred embodiments of the invention.

A non-pneumatic tire and wheel assembly is disclosed comprising a radially inner wheel structure, a spoke ring structure having an inner ring that is mounted on a radially outer wheel structure mounting surface of the wheel structure, wherein the spoke ring structure has a plurality of spoke members, and a radially outer tread ring mounted on the outer circumference of the spoke ring structure. The non-pneumatic tire and wheel assembly has at least one or any combination of the following features:
(i) the inner ring (22) is a discontinuous inner ring (22) having one or more gaps between inner ring segments (24); and/or
(ii) the radially inner wheel structure (40) is axially recessed within the non-pneumatic tire and wheel assembly (10) with respect to the maximum axial width of the spoke ring structure (20) and/or the tread ring (30); and/or
(iii) at least one or all of the spoke members (60, 62) has/have an axially outer edge (23, 25) that is radiused or scalloped; and/or
(iv) each spoke member (60, 62) has a radially inner portion and a radially outer portion, wherein the radially inner portion has an axial width less than the radially outer portion.

The invention provides in a first preferred aspect a non-pneumatic tire and wheel assembly comprising: a wheel, a spoke ring structure having a discontinuous inner ring that is mounted on an outer wheel mounting surface of the wheel, wherein the discontinuous inner ring has one or more gaps, wherein the spoke ring structure has a plurality of spoke members, and an outer tread ring mounted on the outer circumference of the spoke ring. The spoke ring structure includes a radially outer ring having an outer surface that is joined to a radially inner surface of the tread ring by an adhesive polymer. The inner ring is attached to the radially outer wheel structure mounting surface of the wheel structure via an interference fit.

The invention provides in a second preferred aspect a non-pneumatic tire and wheel assembly comprising: a wheel, a spoke ring structure having an inner ring that is mounted on an outer rim mounting surface of the wheel, wherein the spoke ring structure has a plurality of spoke members, and an outer tread ring mounted on the outer circumference of the spoke ring, wherein the wheel is axially recessed within the non-pneumatic tire and wheel assembly. The spoke ring structure includes a radially outer ring having an outer surface that is joined to a radially inner surface of the tread ring by an adhesive polymer. The inner ring is attached to the radially outer wheel structure mounting surface of the wheel structure via an interference fit.

The invention provides in a third preferred aspect a non-pneumatic tire and wheel assembly comprising: a wheel, a spoke ring structure having an inner ring that is mounted on an outer rim mounting surface of the wheel, wherein the spoke ring structure has a plurality of spoke members, and an outer tread ring mounted on the outer circumference of the spoke ring, wherein at least one of the spoke members has an axially outer edge, wherein the axially outer edge is radiused. The spoke ring structure includes a radially outer ring having an outer surface that is joined to a radially inner surface of the tread ring by an adhesive polymer. The inner ring is attached to the radially outer wheel structure mounting surface of the wheel structure via an interference fit.

The invention provides in a fourth preferred aspect a non-pneumatic tire and wheel assembly comprising: a wheel, a spoke ring structure having an inner ring that is mounted on an outer rim mounting surface of the wheel, wherein the spoke ring structure has a plurality of spoke members, and an outer tread ring mounted on the outer circumference of the spoke ring, wherein each spoke member has a radially inner portion and a radially outer portion, wherein the radially inner portion has an axial width less than the radially outer portion. The spoke ring structure includes a radially outer ring having an outer surface that is joined to a radially inner surface of the tread ring by an adhesive polymer. The inner ring is attached to the radially outer wheel structure mounting surface of the wheel structure via an interference fit.

### Definitions

"Aspect Ratio" means the ratio of a tire's section height to its section width.

"Axial" and "axially" means the lines or directions that are parallel to the axis of rotation of the tire.

"Belt Structure" or "Reinforcing Belts" means at least two annular layers or plies of parallel cords, woven or unwoven, underlying the tread, unanchored to the bead, and having both left and right cord angles in the range from 17° to 27° with respect to the equatorial plane of the tire.

"Breakers" or "Tire Breakers" means the same as belt or belt structure or reinforcement belts.

"Circumferential" means lines or directions extending along the pewheeleter of the surface of the annular tread perpendicular to the axial direction; it can also refer to the direction of the sets of adjacent circular curves whose radii define the axial curvature of the tread as viewed in cross section.

"Radial" and "radially" mean directions radially toward or away from the axis of rotation of the tire.

### Brief Description of the Drawings

The invention will be described by way of example and with reference to the accompanying drawings in which:
FIG. 1 is a front view of a non-pneumatic tire and wheel assembly of the present invention;
FIG. 2 is a side perspective view of the non-pneumatic tire and wheel assembly of FIG. 1;
FIG. 3A is a front view of a spoke ring assembly, while FIG. 3B is a close up perspective view of a portion of the spoke ring assembly of FIG. 3A;
FIG. 4A is a cross-sectional view of the non-pneumatic tire and wheel assembly, FIG. 4B is close up perspective view of the spoke portion of the wheel of FIG. 4A; FIG. 4C is a cross-sectional perspective view from the right hand side, while FIG. 4D is a cross-sectional perspective view from the left hand side;
FIG. 5 is an exploded view of the non-pneumatic tire and wheel assembly of FIG. 1;
FIG. 6 is an exploded view of the non-pneumatic tire and wheel assembly of FIG. 1 with a second embodiment of the hub cover;
FIG. 7A is a side view of a hub cover, FIG. 7B is a front view of the hub cover, and FIG. 7C is a rear perspective view of the hub cover; and
FIGS. 8A-8C illustrate the non-pneumatic tire and wheel assembly with different diameter hubcap covers.

### Detailed Description of Preferred Embodiments the Invention

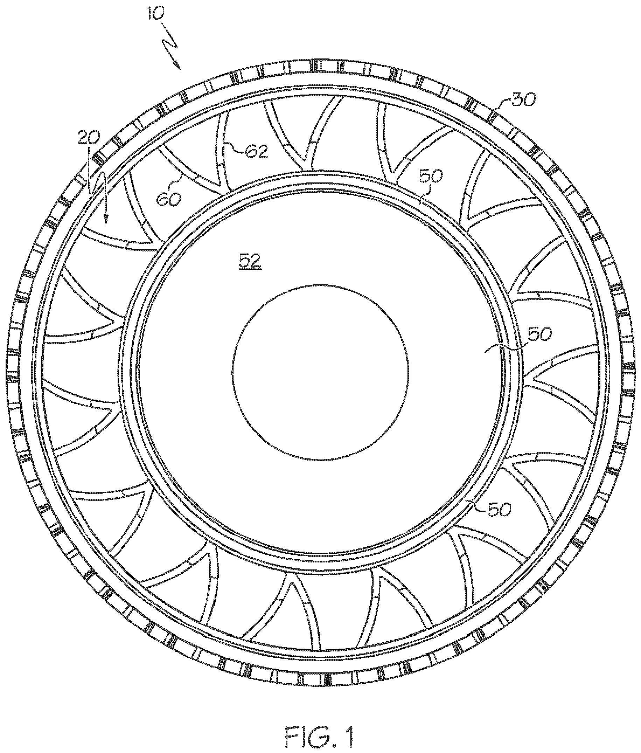

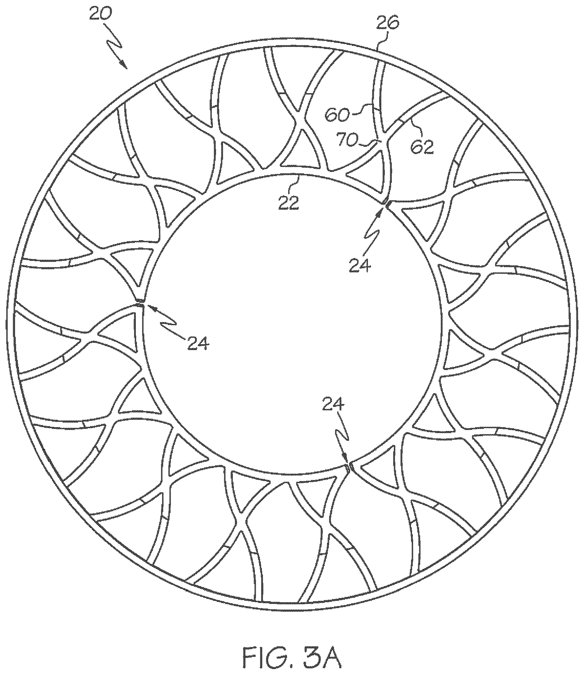

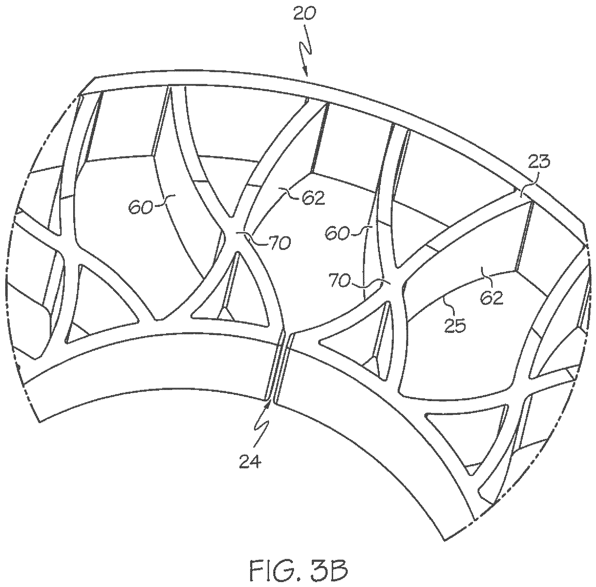

Referring to FIGS. 1 through 5, a non-pneumatic tire and wheel assembly 10 of the present invention is shown. The non-pneumatic tire and wheel assembly 10 includes an outer annular tread ring 30, a spoke ring 20, and a wheel 40. The outer annular tread ring 30 is preferably a one-piece annular structure that is formed of a polymer, rubber or other desired elastomer. The tread ring 30 may be molded and cured as a one-piece ring and is mounted on the outer periphery of the spoke ring. The outer tread surface 31 of the tread ring 30 may include tread elements such as ribs, blocks, lugs, grooves, and sipes as desired in order to improve the performance of the tire in various conditions.

The tread ring 30 preferably includes one or more layers 32 of reinforced fabric, wherein the reinforced fabric is preferably formed of parallel reinforcement cords. The reinforcement cords are preferably nylon, polyester or steel. The reinforced fabric layer 32 is preferably coated with rubber for adhesion to the tread. Alternatively, the tread ring may include one or more layers of rubber coated wire that is preferably spirally wound so that it forms an angle of about zero degrees or in a range of from 5 to 0 degrees or 2 to 0 degrees, so that the wire is oriented in the circumferential direction. More preferably, there are at least two layers of reinforced fabric with no spacing in between.

### Spoke Ring Structure

The non-pneumatic tire and wheel assembly 10 further includes a spoke ring structure 20. The spoke ring structure 20 has an inner portion 22 that is mounted on the wheel rim mounting surface 42. The inner portion 22 is a discontinuous ring divided into two or more segments with gaps 24 between the segments and along the inner radius to allow for ease of assembly with the wheel. The inner portion 22 has an interference fit on the outer rim mounting surface 42 of the wheel 40.

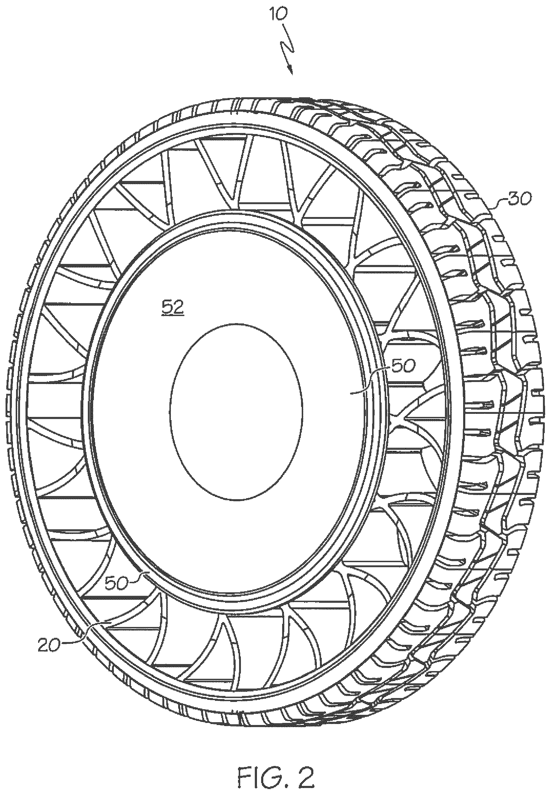

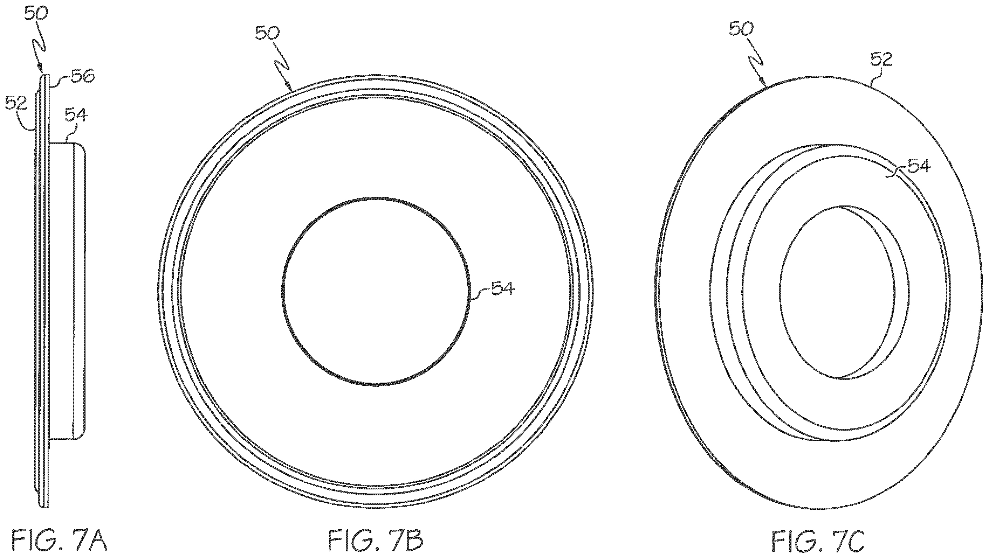

The spoke ring structure further includes an outer ring 26 having an outer surface that is joined to the inner tread surface 34 by an adhesive polymer. The spoke ring structure further includes a plurality of spoke members that extend between an inner portion 22 to the outer ring 26. In a first example shown in FIGS. 2 and 7, the spoke ring structure has a first spoke member 60 that extends from the inner portion 22 to the outer ring 26, preferably at an angle. The spoke ring structure includes a second spoke member 62 that also extends from the inner portion to the outer ring 26, preferably at an angle. The first and second spoke member 60, 62 are joined together at a junction 70 to form an X shaped spoke. The first and second spoke members 60, 62 may be straight or curved. The number of spokes may vary, preferably from 15 to 30, depending upon the vehicle weight and desired spring rate.

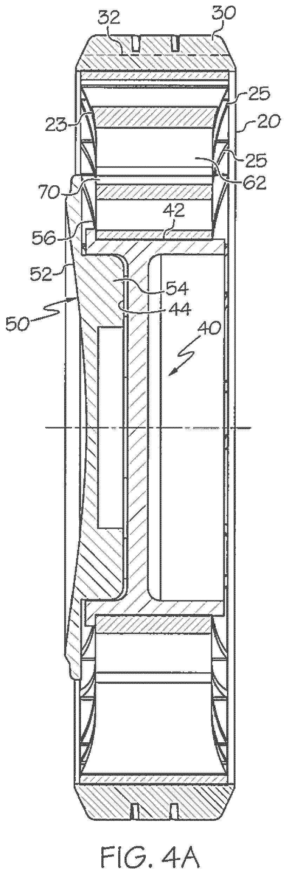

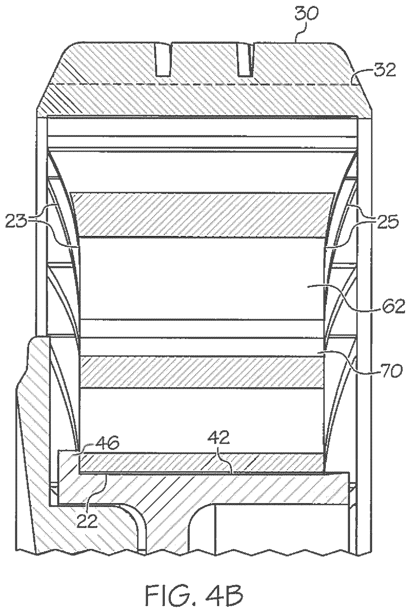

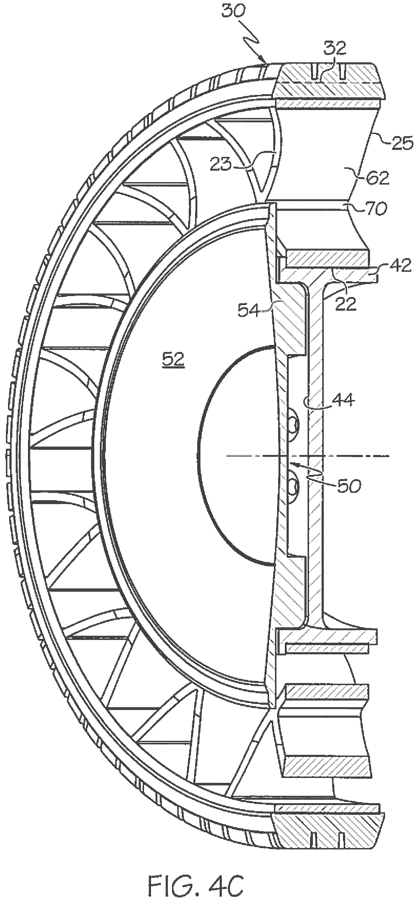

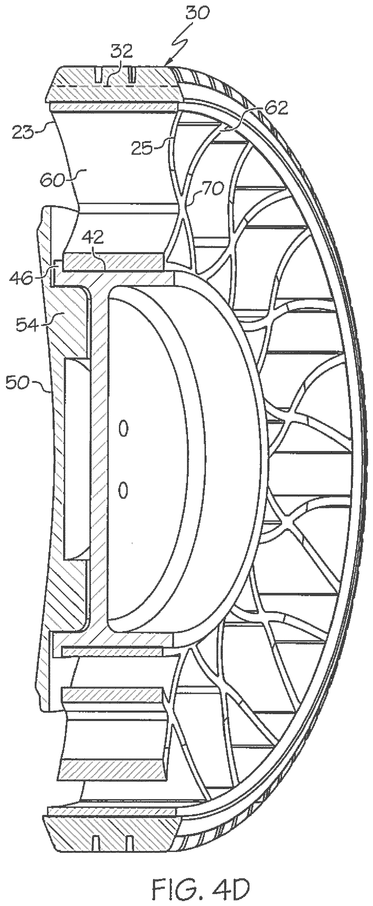

As shown in cross-section in FIG. 4A, the inner portion 22 of the spoke ring structure 20 is mounted on the outer rim mounting surface 42 of the wheel. The axial thickness of the inner portion of the spoke structure is preferably less than the axial thickness of the outer ring 26, allowing the wheel to be recessed inwards of the outer ring of the spoke ring structure, as shown in FIG. 4B. The spoke ring structure has axially outer edges 23, 25 that are radiused or scalloped. The radius R of the radiused outer edges preferably range from 12.7 mm to 50.8 mm, and more preferably from 25.4 mm to 38.1 mm. The scalloped or radiused outer edges allow the wheel to be recessed axially inward of the spoke and tread ring structure. Furthermore, the axial width of a radially outer portion of one or more of the spoke members is greater than the axial width of the radially inner portion of the one or more spoke members. Additionally, it is preferred that there is a single spoke ring structure 20 mounted on the wheel.

The spoke ring structure 20 is preferably an integrally formed annular structure preferably made of a resilient and/or moldable polymeric material such as a thermoplastic elastomer, natural rubber, styrene butadiene rubber, polybutadiene rubber or EPDM rubber or a blend of two or more of these materials which can be utilized in either injection molding or compression molding. The material of the spoke ring structure is selected based upon one or more of the following material properties. The tensile (Young's) modulus of the spoke disk material is preferably in the range of from 5 MPa to 100 MPa, and more preferably in the range of from 10 MPa to 70 MPa.

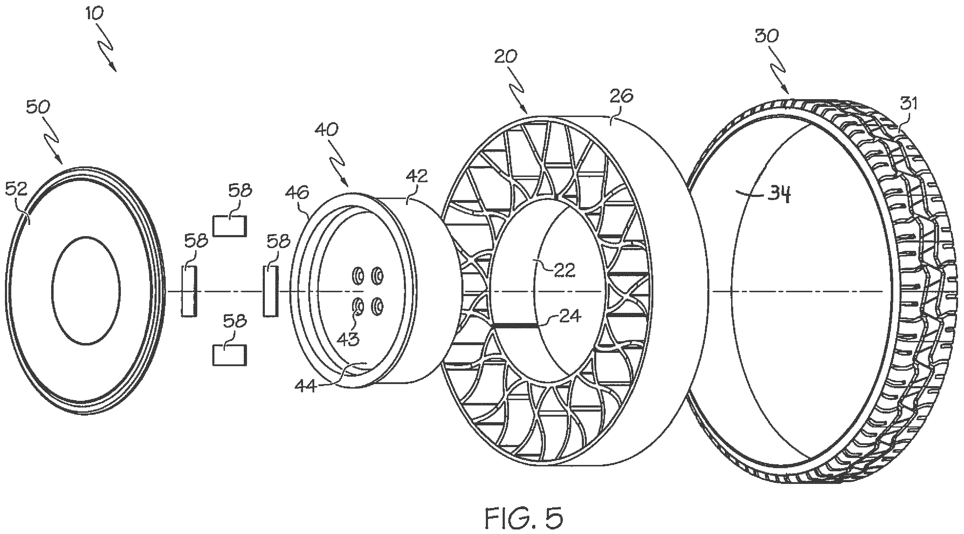

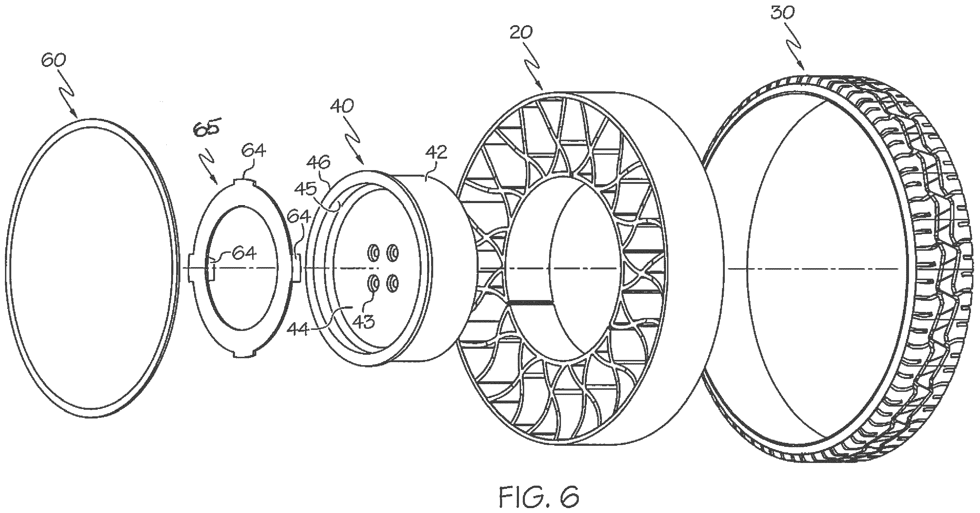

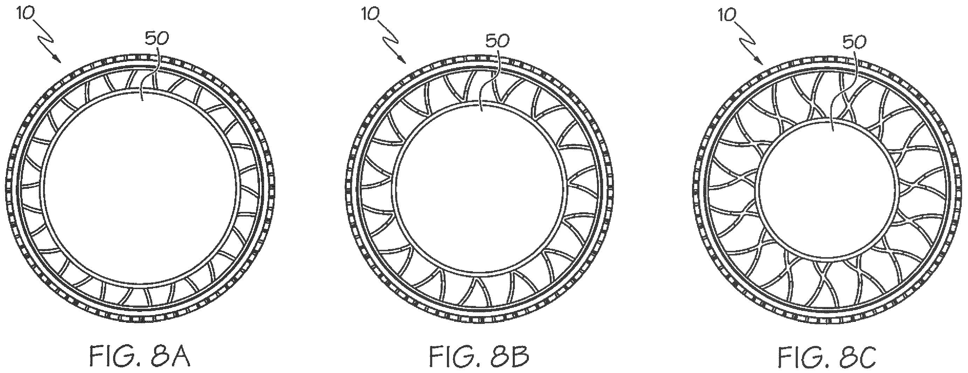

The wheel 40 is shown in FIG. 5 and has an annular outer rim mounting surface 42 for receiving the inner portion 22 of the spoke ring structure 20. The wheel further includes a recessed inner disk portion 44 having a plurality of bolt holes 43 for connecting the wheel assembly to a vehicle. The inner disk portion 44 is surrounded by an outer flange 46. The wheel 40 may include an optional hub cover 50. The hub cover 50 has an outer display surface 52 that can be used to display company logos or designs. The hub cover 50 has an inner surface 56 that has a mounting ring 54 for reception into the recessed inner disk portion. The mounting ring 54 is secured to the inner disk portion by adhesive, or adhesive strips 58 or by hook and loop fastener strips. As shown in FIGS. 8A-8C, the hub cover may have varying diameters to cover the spoke ring structure 20. Although not shown, the hub cover preferably completely covers the spoke ring structure to prevent road debris from clogging the spoke structure. FIG. 6 illustrates an alternate embodiment of the hub cap structure 60, wherein the hub cap comprises a flat disk 60 with a removable ring insert 65 that may be secured by adhesion to the flat disk inner surface 62. The ring insert has retainers 64 which are received within the flange of the wheel and secured thereto by adhesive.

In one example, the tire of the present invention is provided on a mobile delivery vehicle. The mobile delivery vehicle has at least three, preferably four or more non-pneumatic tire and wheel assemblies of the present invention, and more particularly, six non-pneumatic tire and wheel assemblies. The tire has an outer rubber tread and a spoke ring structure that is injection molded and formed of a polyurethane material having a tensile modulus of from 20 to 25 MPa. The spoke ring structure is preferably three-dimensionally printed. The non-pneumatic tire and wheel of the present invention preferably has a spring rate in the range of from 43700 N/m to 52600 N/m. The non-pneumatic tire and wheel of the present invention preferably has an axial width of about 37.5 mm or 35 mm to 40 mm with preferably 36 X shaped spokes having a radial height of about 25.4 mm or from 20 to 30 mm. While the non-pneumatic tire and wheel assembly is described as having X shaped spokes, other spoke designs could be used. The wheel preferably has an outer diameter of about 127 mm or 110 mm to 140 mm but could be sized to be smaller in the outer diameter to provide a greater radial height of the spoke ring structure. The weight of the example tire is 570 grams and is designed for a minimum tread life of 5000 km, preferably 20,000 km or more.

## Claims

1. A non-pneumatic tire and wheel assembly comprising a radially inner wheel structure (40), a spoke ring structure (20) having an inner ring (22) that is mounted on a radially outer wheel structure mounting surface (42) of the wheel structure (40), wherein the spoke ring structure (20) has a plurality of spoke members (60, 62), and a radially outer tread ring (30) mounted on the outer circumference of the spoke ring structure (20), wherein the spoke ring structure (20) includes a radially outer ring (26) having an outer surface that is joined to a radially inner surface (34) of the tread ring (30) by an adhesive polymer and wherein the inner ring (22) is attached to the radially outer wheel structure mounting surface (42) of the wheel structure (40) via an interference fit; and wherein the non-pneumatic tire and wheel assembly (10) further has at least one or any combination of the following features:
a) the inner ring (22) is a discontinuous inner ring (22) having one or more gaps between inner ring segments (24);
b) the radially inner wheel structure (40) is axially recessed within the non-pneumatic tire and wheel assembly (10) with respect to the maximum axial width of the spoke ring structure (20) and/or the tread ring (30),
c) at least one or all of the spoke members (60, 62) has/have an axially outer edge (23, 25) that is radiused or scalloped;
d) each spoke member (60, 62) has a radially inner portion and a radially outer portion, wherein the radially inner portion has an axial width less than the radially outer portion.

2. The non-pneumatic tire and wheel assembly of claim 1 wherein the tread ring (30) has one or more layers (32) of fabric reinforcement.

3. The non-pneumatic tire and wheel assembly of claim 2 wherein the fabric reinforcement is formed of a plurality of parallel reinforcement cords.

4. The non-pneumatic tire and wheel assembly of at least one of the previous claims wherein the spoke members (60, 62) of the spoke ring structure (20) are joined together at a junction (70) to form an X-shaped spoke.

5. The non-pneumatic tire and wheel assembly of at least one of the previous claims wherein, in case of alternative a), b) or c) of claim 1, a radially inner portion of the spoke ring structure (20) has an axial width less than the axial width of a radially outer portion of the spoke ring structure (20).

6. The non-pneumatic tire and wheel assembly of at least one of the previous claims wherein the spoke ring structure (20) is formed of a polymer material having a tensile modulus in the range of 15 to 100 MPa or in a range of from 10 MPa to 70 MPa.

7. The non-pneumatic tire and wheel assembly of at least one of the previous claims wherein the radially inner wheel structure (40) includes an axially recessed inner disk portion (44) having a plurality of bolt holes (43) for connecting the non-pneumatic tire and wheel assembly (10) to a vehicle.

8. A method of manufacturing the non-pneumatic tire and wheel assembly in accordance with at least one of the previous claims, the method comprising forming the non-pneumatic tire and wheel assembly (10) or at least the spoke ring structure (20) by three-dimensional printing.

## Patentansprüche

1. Anordnung aus einem Rad und einem Nicht-Luftreifen, die eine in der radialen Richtung innere radförmige Struktur (40), eine Struktur in der Form eines Speichenrings (20), die einen inneren Ring (22) besitzt, der an einer in der radialen Richtung äußeren Montagefläche (42) der radförmigen Struktur (40) angebracht ist, wobei die Struktur in der Form eines Speichenrings (20) mehrere speichenförmige Elemente (60, 62) besitzt, und einen in der radialen Richtung äußeren Laufflächenring (30), der an dem Außenumfang der Struktur in der Form eines Speichenrings (20) angebracht ist, umfasst; wobei die Struktur in der Form eines Speichenrings (20) einen in der radialen Richtung äußeren Ring (26) umfasst, der eine äußere Oberfläche besitzt, die mit einer in der radialen Richtung inneren Oberfläche (34) des Laufflächenrings (30) über ein Klebepolymer verbunden ist; und wobei der innere Ring (22) an der in der radialen Richtung äußeren Montagefläche (42) der radförmigen Struktur (40) über einen Presssitz befestigt ist; und wobei die Anordnung aus einem Rad und einem Nicht-Luftreifen ferner mindestens eine oder eine beliebige Kombination der nachfolgend aufgeführten Merkmale besitzt, nämlich
a) dass der Innenring (22) ein diskontinuierlicher Innenring (22) ist, der einen oder mehrere Freiräume besitzt, die zwischen Segmenten (24) des Innenrings ausgebildet sind ;
b) dass die in der radialen Richtung innere radförmige Struktur (40) in der axialen Richtung innerhalb der Anordnung aus einem Rad und einem Nicht-Luftreifen in Bezug auf die maximale axiale Breite der Struktur in der Form eines Speichenrings (20) und/oder des Laufflächenrings (30) ausgespart ist ;
c) dass mindestens ein oder alle speichenförmigen Elemente (60, 62) eine in der radialen Richtung äußere Kante (23, 25) besitzen, die abgerundet oder gezackt ist ;
d) dass jedes speichenförmige Element (60, 62) einen in der radialen Richtung inneren Abschnitt und einen in der radialen Richtung äußeren Abschnitt besitzt; wobei der in der radialen Richtung innere Abschnitt eine axiale Breite besitzt, die kleiner als die des in der radialen Richtung äußeren Abschnitts ist.

2. Anordnung aus einem Rad und einem Nicht-Luftreifen nach Anspruch 1, wobei der Laufflächenring (30) eine oder mehrere Verstärkungsschichten (32) auf Gewebebasis besitzt.

3. Anordnung aus einem Rad und einem Nicht-Luftreifen-Baugruppe nach Anspruch 2, wobei die Verstärkung auf Gewebebasis aus einer Anzahl von parallelen Verstärkungskorden hergestellt ist.

4. Anordnung aus einem Rad und einem Nicht-Luftreifen nach mindestens einem der vorhergehenden Ansprüche, wobei die speichenförmigen Elemente (60, 62) der Struktur in der Form eines Speichenrings (20) an einer Verbindungsstelle (70) miteinander verbunden sind, um eine X-förmige Speiche zu erzielen.

5. Anordnung aus einem Rad und einem Nicht-Luftreifen-Baugruppe nach mindestens einem der vorhergehenden Ansprüche, wobei bei der Variante a), b) oder c) nach Anspruch 1 ein in der radialen Richtung innerer Abschnitt der Struktur in der Form eines Speichenrings (20) eine axiale Breite besitzt, die kleiner ist als die axiale Breite des in der radialen Richtung äußeren Abschnitts der Struktur in der Form eines Speichenrings (20).

6. Anordnung aus einem Rad und einem Nicht-Luftreifen nach mindestens einem der vorhergehenden Ansprüche, wobei die Struktur in der Form eines Speichenrings (20) aus einem polymeren Material gebildet ist, das einen Zug-Elastizitätsmodul in dem Bereich von 15 bis 100 MPa oder in einem Bereich von 10 MPa bis 70 MPa besitzt.

7. Anordnung aus einem Rad und einem Nicht-Luftreifen nach mindestens einem der vorhergehenden Ansprüche, wobei die radförmige Struktur (40), die in der radialen Richtung innen liegt, einen inneren Scheibenabschnitt (44) umfasst, der in der axialen Richtung ausgehöhlt ist und eine Anzahl von Bolzendurchgangslöchern (43) besitzt, um die Anordnung aus einem Rad und einem Nicht-Luftreifen (10) mit einem Fahrzeug zu verbinden.

8. Verfahren zur Herstellung der Anordnung aus einem Rad und einem Nicht-Luftreifen in Übereinstimmung mit mindestens einem der vorhergehenden Ansprüche, wobei das Verfahren das Bilden der Anordnung aus einem Rad und einem Nicht-Luftreifen (10) oder mindestens der Struktur in der Form eines Speichenrings (20) durch dreidimensionalen Druck umfasst.

## Revendications

1. Assemblage d'une roue et d'un bandage non pneumatique, qui comprend : une structure en forme de roue (40), interne dans la direction radiale ; une structure sous la forme d'un anneau à rayons (20), qui possède un anneau interne (22) qui est monté sur une surface de montage (42), externe dans la direction radiale, de la structure en forme de roue (40) ; dans lequel la structure sous la forme d'un anneau à rayons (20) possède plusieurs éléments en forme de rayons (60, 62) ; ainsi qu'un anneau faisant office de bande de roulement (30), externe dans la direction radiale, qui est monté sur la circonférence externe de la structure sous la forme d'un anneau à rayons (20) ; dans lequel la structure sous la forme d'un anneau à rayons (20) englobe un anneau (26), externe dans la direction radiale, qui possède une surface externe qui est jointe à une surface (34), interne dans la direction radiale, de l'anneau faisant office de bande de roulement (30) par l'intermédiaire d'un polymère adhésif ; et dans lequel l'anneau interne (22) est fixé à la surface de montage (42), externe dans la direction radiale, de la structure en forme de roue (40) via un ajustement serré ; et dans lequel l'assemblage d'une roue et d'un bandage non pneumatique possède en outre au moins une combinaison ou n'importe quelle combinaison des caractéristiques indiquées ci-après, à savoir
a) le fait que l'anneau interne (22) représente un anneau interne discontinu (22) qui possède un ou plusieurs espaces libres ménagés entre des segments (24) de l'anneau interne ;
b) le fait que la structure en forme de roue (40), interne dans la direction radiale, est évidée, dans la direction axiale au sein de l'assemblage d'une roue et d'un bandage non pneumatique par rapport à la largeur axiale maximale de la structure sous la forme d'un anneau à rayons (20) et/ou de l'anneau faisant office de bande de roulement (30) ;
c) le fait qu'au moins un élément ou la totalité des éléments en forme de rayons (60, 62) possède(nt) un bord (23, 25), externe dans la direction radiale, qui est arrondi ou échancré ;
d) le fait que chaque élément en forme de rayon (60, 62) possède une portion, interne dans la direction radiale, et une portion, externe dans la direction radiale ; dans lequel la portion, interne dans la direction radiale, possède une largeur axiale qui est inférieure à celle de la portion, externe dans la direction radiale.

2. Assemblage d'une roue et d'un bandage non pneumatique selon la revendication 1, dans lequel l'anneau faisant office de bande de roulement (30) possède une ou plusieurs couches (32) de renforcement à base de tissu.

3. Assemblage d'une roue et d'un bandage non pneumatique selon la revendication 2, dans lequel le renforcement à base de tissu est réalisé à partir d'un certain nombre de câblés de renforcement parallèles.

4. Assemblage d'une roue et d'un bandage non pneumatique selon au moins une des revendications précédentes, dans lequel les éléments en forme de rayons (60, 62) de la structure sous la forme d'un anneau à rayons (20) sont joints les uns aux autres à une jonction (70) afin d'obtenir un rayon en forme de X.

5. Assemblage d'une roue et d'un bandage non pneumatique selon au moins une des revendications précédentes, dans lequel, dans le cas de la variante a), b) ou c) selon la revendication 1, une portion, interne dans la direction radiale, de la structure sous la forme d'un anneau à rayons (20) possède une largeur axiale qui est inférieure à la largeur axiale de la portion, externe dans la direction radiale, de la structure sous la forme d'un anneau à rayons (20).

6. Assemblage d'une roue et d'un bandage non pneumatique selon au moins une des revendications précédentes, dans lequel la structure sous la forme d'un anneau à rayons (20) est constituée d'une matière polymère qui possède un module d'élasticité en traction dans la plage de 15 à 100 MPa ou dans une plage de 10 MPa à 70 MPa.

7. Assemblage d'une roue et d'un bandage non pneumatique selon au moins une des revendications précédentes, dans lequel la structure en forme de roue (40), interne dans la direction radiale, englobe une portion de disque interne (44) évidée dans la direction axiale, qui possède un certain nombre de trous de passage de boulons (43) afin de relier l'assemblage d'une roue et d'un bandage non pneumatique (10) à un véhicule.

8. Procédé de fabrication de l'assemblage d'une roue et d'un bandage non pneumatique en conformité avec au moins une des revendications précédentes, le procédé comprenant le fait de former l'assemblage d'une roue et d'un bandage non pneumatique (10) ou au moins la structure sous la forme d'un anneau à rayons (20) par l'intermédiaire d'une impression en trois dimensions.
